# EUROPÄISCHE PATENTSCHRIFT

(11) **EP 1 570 701 B1**
(45) Veröffentlichungstag und Bekanntmachung des Hinweises auf die Patenterteilung: **23.08.2006**
(21) Anmeldenummer: 03813100.9
(22) Anmeldetag: 25.11.2003
(51) Int. Cl.: H04Q 7/38

(54) **VERFAHREN ZUR TEILNEHMERSEITIGEN VERSENDUNG VON DATEN IN EINEM HETEROGENEN NETZWERK**
METHOD FOR SUBSCRIBER TRANSMISSION OF DATA IN A HETEROGENEOUS NETWORK
PROCEDE PERMETTANT L'ENVOI DE DONNEES COTE ABONNE DANS UN RESEAU HETEROGENE

(30) Priorität: 13.12.2002 EP 02027976
(43) Veröffentlichungstag der Anmeldung: 07.09.2005
(73) Patentinhaber: SIEMENS AKTIENGESELLSCHAFT, 80333 München (DE)
(72) Erfinder: DILLINGER, Markus, 81737 München (DE); Luo, Jijun, München 81677 (DE)
(86) Internationale Anmeldenummer: PCT/EP2003/013261
(87) Internationale Veröffentlichungsnummer: WO 2004/056149

(56) Entgegenhaltungen:
- DE-A- 19 957 642
- US-A- 5 943 333
- US-A- 6 128 322
- US-A- 6 148 010
- WU G ET AL: "MIRAI ARCHITECTURE FOR HETEROGENEOUS NETWORK" IEEE COMMUNICATIONS MAGAZINE, IEEE SERVICE CENTER. PISCATAWAY, N.J, US, Bd. 40, Nr. 2, Februar 2002 (2002-02), Seiten 126-134, XP001125429 ISSN: 0163-6804

## Beschreibung

Die Erfindung betrifft ein Verfahren zur Organisation der teilnehmerseitigen Versendung einer Datenmenge über Funk nach dem Oberbegriff des Anspruchs 1. Weiterhin betrifft die Erfindung eine Einrichtung in einem heterogenen Netzwerk zur Organisation der Versendung einer Datenmenge über Funk nach dem Oberbegriff des Anspruchs 8.

In Funkkommunikationssystemen werden Informationen (beispielsweise Sprache, Bildinformation, Videoinformation, SMS (Short Message Service) oder andere Daten) mit Hilfe von elektromagnetischen Wellen über eine Funkschnittstelle zwischen sendender und empfangender Station übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei teilnehmerseitige Funkstationen, z.B. Mobilstationen, Basisstationen, z.B. Node B's, sowie weitere netzseitige Einrichtungen. Die Funkstationen und die Basisstationen sind in einem Funkkommunikationssystem über eine Funkschnittstelle miteinander verbunden. Die Versendung von Daten von einer Funkstation zu einer Basisstation erfolgt in Aufwärtsrichtung, diejenige von einer Basisstation zu einer Funkstation in Abwärtsrichtung.

Funkkommunikationssysteme können sich z.B. durch ihre Funkzugangstechnologie oder Übertragungsverfahren, durch Netzwerksbetriebssysteme und Netzwerkprotokolle unterscheiden. Funknetze mit einem räumlich stark begrenzten Funkabdeckungsbereich nennt man WLANs (Wireless Local Area Networks). Beispiele für Funkkommunikationssysteme sind Systeme nach den Standards GSM (Global System for Mobile Communications), GPRS (General Packet Radio Service), EDGE (Enhanced Data Rates for GSM Evolution), TSM (Time Division Synchronous Code Division Multiple Access), DECT (Digital European Cordless Telephony), IS95 (Interim Standard No. 95), cdma2000, UMTS (Universales mobiles Telekommunikationssystem), IEEE 802.11 und Bluetooth.

Der Zugriff von Funkstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Funkstationen aufgeteilt werden. Dabei findet häufig (zum Beispiel bei GSM, TETRA (Terrestrial Trunked Radio), DECT, UMTS) eine Unterteilung des Übertragungsmediums in Frequenz- und/oder Zeitkanäle entsprechend der Funkschnittstelle statt. Auch Kombinationen mehrerer dieser Verfahren werden angewendet. Um einen sparsamen Umgang mit den knappen Funkressourcen zu ermöglichen, befinden sich in Funkkommunikationssystemen Einrichtungen, wie z.B. Steuereinrichtungen, welche die Funkressourcen verwalten bzw. eine Ressourcenzuteilung vornehmen. Die Ressource einer Funkschnittstelle kann hierbei zum Beispiel ein Zeitschlitz-Frequenz-Paar oder auch nur eines von beiden (Zeitschlitz oder Frequenz) sein.

Eine Mehrzahl von Funkkommunikationssystemen mit ihren jeweiligen Funknetzen kann unter dem Begriff heterogenes Netzwerk zusammengefasst werden. Ein solches heterogenes Netzwerk kann Komponenten von verschiedenen Herstellern und Betreibern enthalten. Die in den einzelnen Funkkommunikationssystemen eines heterogenen Netzwerkes eingesetzten Technologien können sich unterscheiden. Eine Überlappung der Funkabdeckungsbereiche von zumindest manchen der einzelnen Funknetze ist in der Regel zumindest in einem örtlich begrenzten Bereich gegeben. Bezüglich der Kopplung der einzelnen Funkkommunikationssysteme untereinander existiert eine Reihe von Möglichkeiten. Bei einer schwachen Kopplung (loose coupling) z.B. ist kein Handover zwischen den einzelnen Funknetzen möglich. Bei einer starken Kopplung (tight coupling) hingegen existiert eine gemeinsame Einrichtung für mehrere Funkkommunikationssysteme, welche den Funkzugang zu diesen regelt.

Eine zur Kommunikation mit einem heterogenen Netzwerk geeignete Funkstation weist in dem Fall, dass in den einzelnen Funkkommunikationssystemen unterschiedliche Funkzugangstechnologien verwendet werden, Einrichtungen auf, welche es der Funkstation ermöglichen, mit verschiedenartigen Funknetzen zu kommunizieren. Eine derartige Multi-Mode Fähigkeit ist z.B. in 3G TR 21.910 v3.0.0 (2000-07), Multimode UE Issues Categories, Principles and Procedures (Release 1999) beschrieben.

Beabsichtigt eine Funkstation, Daten in Aufwärtsrichtung (Uplink) in einem heterogenen Netzwerk zu versenden, so stehen Basisstationen verschiedener Funkkommunikationssysteme als Empfänger der Daten zur Verfügung.

Das Dokument DE 199 57 642 A1 beschreibt ein Verfahren zur Funkübertragung in einem heterogenen Funknetz, bei welchem ein möglichst geeignetes Funksystem für diese Übertragung ermittelt und verwendet wird. Zu Beginn wird eine Verbindung aufgebaut. Hierbei werden verschiedene Größen von der Sende-Empfangsstation mitgeteilt, welche für die spätere Entscheidung über das geeignete Funknetz relevant sind. Aus diesen Informationen wird das günstigste Funkübertragungssystem ausgewählt.

Der Erfindung liegt die Aufgabe zugrunde, ein Verfahren der eingangs genannten Art für ein heterogenes Netzwerk aufzuzeigen, welches unter Verwendung einer den einzelnen Funkkommunikationssystemen gemeinsamen Einrichtung eine effiziente Versendung von Daten in Aufwärtsrichtung erlaubt. Weiterhin soll eine mehreren Funknetzen eines heterogenen Netzwerkes gemeinsame Einrichtung der eingangs genannten Art vorgestellt werden, welche die effiziente Versendung von Daten in Aufwärtsrichtung unterstützt.

Diese Aufgabe wird hinsichtlich des Verfahrens durch ein Verfahren mit den Merkmalen des Anspruchs 1 gelöst.

Vorteilhafte Ausgestaltungen und Weiterbildungen sind Gegenstand der Unteransprüche.

Es sind mindestens zwei Funknetze vorhanden, deren jeweilige Funkabdeckungsbereiche sich in mindestens einem Überlappungsbereich überlappen. Die mindestens zwei Funknetze sind mit einer gemeinsamen Einrichtung verbunden. Eine Funkstation mit Einrichtungen zur teilnehmerseitigen Versendung von Funksignalen zu den mindestens zwei Funknetzen befindet sich in dem mindestens einen Überlappungsbereich. Erfindungsgemäß übermittelt die gemeinsame Einrichtung über mindestens eines der mindestens zwei Funknetze der Funkstation ein Signal, welches Informationen über eine Zuordnung von einem oder mehreren Bestandteilen der zu versendenden Datenmenge zu einem oder mehreren der mindestens zwei Funknetze beinhaltet.

Bei den Funknetzen kann es sich um gleichartige oder auch um grundsätzlich verschiedenartige Funknetze handeln. Wie oben bereits ausgeführt, können sich Funknetze z.B. durch ihre Funkzugangstechnologie oder Übertragungsverfahren, durch Netzwerksbetriebssysteme oder Netzwerkprotokolle unterscheiden. Sie bilden zusammen ein heterogenes Netzwerk. Das heterogene Netzwerk kann z.B. aus einem WLAN, einem UMTS und einem GMS Netz bestehen.

Die Funkstation kann nach dem Empfang des Signals von der gemeinsamen Einrichtung den oder die Bestandteile der zu versendenden Datenmenge gemäß der Zuordnung zu dem oder den jeweiligen Funknetzen senden. In der Regel wird die Datenmenge in Bestandteile aufgeteilt und jeder dieser Bestandteile wird dann einem Funknetz zugeordnet. Wird die Datenmenge beispielsweise in drei gleich große Bestandteile aufgeteilt, so kann ein erster Bestandteil zu einem ersten Funknetz, ein zweiter Bestandteil zu einem zweiten Funknetz und ein dritter Bestandteil zu einem dritten Funknetz gesendet werden. Auch eine Zuordnung eines oder mehrerer Bestandteile zu mehr als einem Funknetz ist möglich. So könnte ein erster Bestandteil und gegebenenfalls auch ein zweiter Bestandteil der Datenmenge zu einem ersten und einem zweiten Funknetz zugeordnet werden. Dies entspräche dann einer doppelten Versendung von Daten. Weiterhin kann die Summe der Bestandteile kleiner oder größer als die gesamte Datenmenge sein. Während der Fall, dass die Summe der Bestandteile größer als die Datenmenge ist, einer Mehrfachversendung von Bestandteilen an mehrere Funknetze entspricht, kann der Fall, dass die Summe der Bestandteile kleiner als die Datenmenge ist, beispielsweise dadurch entstehen, dass aktuell nicht genügend freie Ressourcen zur Versendung der gesamten Datenmenge zur Verfügung stehen. Der oder die restlichen Bestandteile könnten dann in folgenden Signalen zu Funknetzen zugeordnet und an diese versendet werden. In der Regel wird die Datenmenge also nicht an ein einziges Funknetz versendet, sondern in Bestandteile aufgeteilt, welche dann jeweils verschiedenen Funknetzen zugeordnet werden, so dass die Datenmenge in Bestandteile aufgeteilt an mindestens zwei Funknetze versendet wird. Es ist jedoch auch möglich, dass die Datenmenge zu einem der Funknetze versendet wird. In diesem Fall kann eine Signalisierung an die anderen Funknetze, über welche die Datenmenge nicht versendet werden soll, erfolgen, welche indiziert, dass ihnen keine Bestandteile der Datenmenge zugeordnet wurden.

Die Aufteilung der Datenmenge in Bestandteile und ihre Zuordnung zu Funknetzen kann z.B. gemäß der Art der Daten, dem Volumen der Daten, der Auslastung oder anderer Eigenschaften der Funknetze oder auch über einen Zufallsprozess erfolgen.

Bezüglich der Zuordnung von Bestandteilen der Datenmenge zu den Funknetzen besteht somit eine Vielzahl von Variationsmöglichkeiten, welche das erfindungsgemäße Verfahren beinhaltet.

Das erfindungsgemäße Verfahren erlaubt die Steuerung der Versendung von Daten in Aufwärtsrichtung in einem heterogenen Netzwerk. Durch die erfindungsgemäße Signalisierung können die Funkressourcen der Mehrzahl von Funknetzen effizient ausgenutzt werden.

In einer Ausgestaltung der Erfindung erfolgt die Zuordnung in der gemeinsamen Einrichtung aufgrund von Informationen über eine Auslastung von Funkressourcen in einem oder mehreren der mindestens zwei Funkkommunikationssysteme. Dies erlaubt insbesondere eine effiziente Verteilung der knappen Funkressourcen, indem Daten mit Vorzug an diejenigen Funknetze versendet werden, welche aktuell nicht ausgelastet sind. Die Informationen bezüglich der Auslastung können der gemeinsamen Einrichtung von den einzelnen Funknetzen übermittelt werden. Entsprechend können hierbei auch Informationen über Interferenzwerte in den Funknetzen zum Einsatz kommen.

In einer anderen Ausgestaltung der Erfindung erfolgt die Zuordnung in der gemeinsamen Einrichtung aufgrund von Informationen über eine Verbindungsgüte zwischen der Funkstation und einem oder mehreren der mindestens zwei Funkkommunikationssysteme. Die Qualität der Verbindung kann von der Funkstation oder von einem oder mehreren der Funknetze bestimmt werden. Von Vorteil ist dann eine Zuordnung von Bestandteilen insbesondere vorwiegend zu Funknetzen, welche aktuell eine große Verbindungsgüte zu der Funkstation aufweisen.

In einer weiteren Ausgestaltung der Erfindung erfolgt die Zuordnung in der gemeinsamen Einrichtung aufgrund von Informationen über die zu versendende Datenmenge. Bei diesen Informationen, welche von der Funkstation übermittelt werden, kann es sich z.B . um die Art und das Volumen der Daten, sowie um die Qualitätsanforderungen (Quality of Service, QoS) handeln.

Mit Vorteil kann die Zuordnung in der gemeinsamen Einrichtung aufgrund von von der Funkstation übermittelten Angaben erfolgen. Z.B. kann die Funkstation ein Präferenzvotum für ein bestimmtes Funknetz abgeben. Hierbei können auch Kostengründe aufgrund unterschiedlicher Vergebührung in den Funknetzen eine Rolle spielen. In die von der Funkstation übermittelten Angaben bezüglich der Zuordnung von Bestandteilen zu Funknetzen können auch mehrere Kriterien einer Funknetzwahl in Kombination einfließen.

In Weiterbildung der Erfindung beinhaltet das Signal die von der Funkstation für den oder die Bestandteile der zu versendenden Datenmenge zu verwendenden Funkressourcen. Z.B. kann der Funkstation somit mitgeteilt werden, welche Frequenzen für die Versendung zu verwenden sind.

Vorteilhafterweise wird das Signal von der gemeinsamen Einrichtung an die mindestens zwei Funknetze gesendet. Dies kann bei dem Vorliegen von mehr als zwei Funknetzen eine Versendung des Signals an einen Teil der Funknetze oder an alle Funknetze. Somit ist einem Teil der oder allen Funknetzen bekannt, welche Daten sie von der Funkstation erhalten werden und gegebenenfalls welche Funkressourcen für die Funkstation zu reservieren sind.

Die oben genannte Aufgabe wird hinsichtlich der gemeinsamen Einrichtung durch eine Einrichtung mit den Merkmalen des Anspruchs 8 gelöst.

Erfindungsgemäß weist die Einrichtung Mittel zur Bildung einer Zuordnung von einem oder mehreren Bestandteilen der von der Funkstation zu versendenden Datenmenge zu einem oder mehreren der mindestens zwei Funknetze auf. Weiterhin weist sie Mittel zur Erzeugung und Übermittlung eines Signals mit Informationen über die Zuordnung über mindestens eines der mindestens zwei Funknetze an die Funkstation auf.

Entsprechende Mittel zur Durchführung der Verfahrensschritte gemäß der Erfindung nach Anspruch 1 und den Ausgestaltungen und Weiterbildungen der Erfindung können in der erfindungsgemäßen Einrichtung vorgesehen sein.

Die Erfindung wird im folgenden anhand eines Ausführungsbeispiels erläutert. Dabei zeigen
- Figur 1:: schematisch ein heterogenes Netzwerk,
- Figur 2:: ein Ablaufdiagramm eines erfindungsgemäßen Verfahrens.

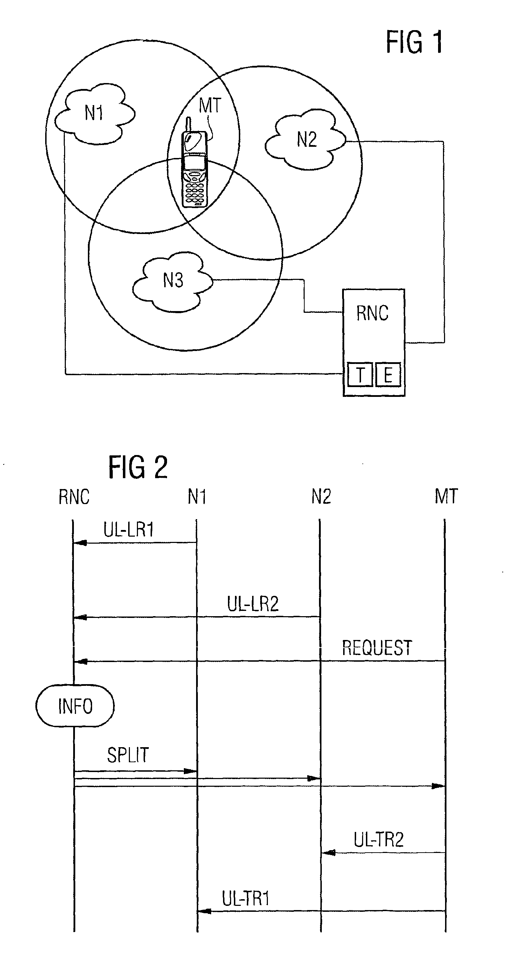

In Figur 1 ist schematisch ein heterogenes Netzwerk dargestellt. Dieses umfasst die einzelnen Funknetze N1, N2 und N3. Die Funkabdeckungsbereiche dieser einzelnen Funknetze N1, N2 und N3 sind durch Kreise angedeutet. Sie überschneiden sich in dem Bereich, in welchem sich die Funkstation MT (Mobile Terminal) befindet. Bei der Funkstation kann es sich um verschiedenartige Einrichtungen, wie z.B. ein Mobiltelefon oder ein Laptop, handeln. Die Funkstation ist in der Lage, zu jedem der einzelnen Funknetze N1, N2 und N3 Daten zu versenden und auch Daten von diesen zu empfangen. Ein derartige Multi-Mode fähige Funkstation ist mit verschiedenen Funkzugangstechnologien ausgerüstet. Ein Beispiel hierfür sind SDR (Software Defined Radio) Funkstationen. Die Versendung der Daten zu den einzelnen Funknetzen N1, N2 und N3 kann ebenso wie der Empfang von Daten von den einzelnen Funknetzen N1, N2 und N3 gleichzeitig, zeitliche teilweise überlappend und/oder zeitlich getrennt stattfinden.

Die einzelnen Funknetze N1, N2 und N3 sind mit einer gemeinsamen Einrichtung RNC verbunden. Eine Aufgabe der gemeinsamen Einrichtung RNC ist es, Funkressourcen der einzelnen Funknetze N1, N2 und N3 zu verwalten.

Die Funkstation MT beabsichtigt, eine Datenmenge in Aufwärtsrichtung zu versenden. Hierfür steht als Empfänger eine Basisstation des Funknetzes N1, eine Basisstation des Funknetzes N2, sowie eine Basisstation des Funknetzes N3 zur Verfügung. Die Datenmenge kann als Ganzes zu einem oder mehreren der einzelnen Funknetze N1, N2 oder N3 versendet werden. Es ist jedoch auch möglich, die Datenmenge aufzuteilen und die Bestandteile zu verschiedenen Funknetzen N1, N2 oder N3 zu versenden. Wird die Datenmenge z.B. in vier Bestandteile aufgeteilt, so kann der erste und der vierte Bestandteil dem - ersten Funknetz N1, der zweite Bestandteil dem zweiten Funknetz N2 und der dritte Bestandteil dem Funknetz N3 zugeordnet werden.

Die gemeinsame Einrichtung RNC weist eine Einrichtung E auf, welche eine Zuordnung von Bestandteilen der in Aufwärtsrichtung zu versendenden Datenmenge zu den einzelnen Funknetzen N1, N2 oder N3 vornehmen kann. Eine weitere Einrichtung T erzeugt nach erfolgter Zuordnung ein Signal, welches diese Zuordnung indiziert. Dieses Signal kann durch die Einrichtung T zu einem oder mehreren der einzelnen Netzwerke N1, N2 oder N3 versendet werden.

Figur 2 verdeutlicht den Ablauf des erfindungsgemäßen Verfahrens. Das Funknetz N1 übermittelt eine Nachricht UL-LR1 (Uplink Load Report 1) an die gemeinsame Einrichtung RNC, welche die aktuelle oder prognostizierte Auslastung der Funkressourcen des Funknetzes N1 anzeigt. Eine ebensolche Nachricht UL-LR2 sendet auch das Funknetz N2 an die gemeinsame Einrichtung RNC. Zur Vereinfachung wurde in Figur 2 kein weiteres Funknetz aufgeführt.

Die Funkstation MT sendet eine Nachricht REQUEST, welche eine Anfrage nach Aufwärts-Funkressourcen für die Versendung der Datenmenge beinhaltet. Hierin wird die Art der Daten und das Volumen der Datenmenge spezifiziert. Die Nachricht REQUEST wird von der Funkstation MT an mindestens eine Basisstation des Funknetzes N1 oder an mindestens eine Basisstation des Funknetzes N2 oder auch an jeweils mindestens eine Basisstation der beiden Funknetze N1 und N2 gesendet. Diese übermitteln die Nachricht dann an die gemeinsame Einrichtung RNC.

Aufgrund der erhaltenen Informationen kann die gemeinsame Einrichtung RNC in einem Schritt INFO eine Zerlegung der Datenmenge in Bestandteile und eine Zuordnung der Bestandteile zu den einzelnen Funknetzen N1 und N2 vornehmen. Hierbei können auch weitere Informationen einfließen, wie z.B. Informationen über eine Verbindungsgüte zwischen der Funkstation MT und einem oder mehreren Funknetzen N1 oder N2, welche von der Funkstation MT oder direkt von einem oder mehreren Funknetzen gesendet wurden. Weiterhin ist es möglich, dass alternativ oder zusätzlich Präferenzen der Funkstation MT bezüglich des empfangenden Funknetzes berücksichtigt werden. Eine wichtige Rolle können auch Qualitätsanforderungen bei der Übermittlung der Datenmenge spielen.

Nach der Zuordnung der Bestandteile der Datenmenge zu den Funknetzen N1 oder N2 übermittelt die gemeinsame Einrichtung RNC eine Nachricht SPLIT. Diese beinhaltet Informationen darüber, welcher Bestandteil der Datenmenge von der Funkstation MT an welches Funknetz N1 oder N2 zu versenden ist. Weiterhin indiziert sie, welche Funkressourcen für die Versendung des jeweiligen Bestandteils zu verwenden sind. Die Nachricht SPLIT wird von der gemeinsamen Einrichtung RNC an mindestens eines der Funknetze N1 oder N2 übermittelt, von wo aus sie an die Station MT gesendet wird. Die Funknetze N1 und N2 können der Nachricht SPLIT entnehmen, welche Funkressourcen im folgenden von der Funkstation MT belegt werden.

Nach dem Empfang der Nachricht SPLIT sendet die Funkstation MT eine Nachricht UL-TR2 (Uplink Traffic 2). Diese enthält den Bestandteil der Datenmenge, welche in der vorhergehenden Nachricht SPLIT dem Funknetz N2 zugeordnet wurde. Entsprechend wird gleichzeitig oder anschließend die Nachricht UL-TR1 mit dem jeweiligen Bestandteil der Datenmenge an das Funknetz N1 gesendet.

Besteht die Datenmenge z.B. aus Echtzeitdaten in Form eines Telefonats mit einer kleinen Datenrate und aus Nichtechtzeitdaten mit einer höheren Datenrate, so kann beispielsweise ein GSM Funkkommunikationssystem das Telefonat übernehmen, während die höherratigen Nichtechtzeitdaten an ein WLAN gesendet werden. Die zu verwendenden Frequenzen und Zeitschlitze kann die Funkstation der Nachricht SPLIT entnehmen. Es ist jedoch auch möglich, dass die Anzeige der zu verwendenden Funkressourcen in einer anderen als der Nachricht SPLIT erfolgt, so z.B. in einer von dem jeweiligen Funknetz gesendeten Nachricht, an das der Bestandteil gemäß der Nachricht SPLIT versendet werden soll. Auch innerhalb der einzelnen Datengruppen wie z.B. innerhalb der Echtzeitdaten und Nichtechtzeitdaten kann eine Aufspaltung erfolgen. Diese Aufspaltung erfolgt dann bevorzugt sinnvollerweise gemäß den Auslastungen der verschiedenen Funknetze. Auch eine Zuordnung der ganzen Datenmenge zu einem einzigen Funknetz ist möglich.

## Patentansprüche

1. Verfahren zur Organisation der teilnehmerseitigen Versendung einer Datenmenge über Funk durch eine Funkstation (MT),
wobei ein heterogenes Netzwerk umfassend mindestens zwei Funkkommunikationssysteme mit ihren jeweiligen Funknetzen (N1, N2, N3), deren Funkabdeckungsbereiche sich in mindestens einem Überlappungsbereich örtlich überlappen, vorhanden ist,
und wobei die mindestens zwei Funknetze (N1, N2, N3) mit einer gemeinsamen Einrichtung (RNC) verbunden sind,
wobei sich die Funkstation (MT) in dem mindestens einen Überlappungsbereich befindet,
und wobei die Funkstation (MT) Einrichtungen zur teilnehmerseitigen Versendung von Funksignalen zu den mindestens zwei Funknetzen (N1, N2, N3) aufweist,
**dadurch gekennzeichnet,**
**dass** die gemeinsame Einrichtung (RNC) über mindestens eines der mindestens zwei Funknetze (N1, N2, N3) der Funkstation (MT) ein Signal (SPLIT) übermittelt, welches Informationen über eine Zuordnung von einem oder mehreren Bestandteilen der zu versendenden Datenmenge zu den mindestens zwei Funknetzen (N1, N2, N3) beinhaltet.

2. Verfahren nach Anspruch 1, **dadurch gekennzeichnet,**
**dass** die Zuordnung in der gemeinsamen Einrichtung (RNC) aufgrund von Informationen (UL-LR1, UL-LR2) über eine Auslastung von Funkressourcen in einem oder mehreren der mindestens zwei Funkkommunikationssysteme erfolgt.

3. Verfahren nach Anspruch 1 oder 2, **dadurch gekennzeichnet,**
**dass** die Zuordnung in der gemeinsamen Einrichtung (RNC) aufgrund von Informationen über eine Verbindungsgüte zwischen der Funkstation (MT) und einem oder mehreren der mindestens zwei Funkkommunikationssysteme erfolgt.

4. Verfahren nach einem der Ansprüche 1 bis 3, **dadurch gekennzeichnet,**
**dass** die Zuordnung in der gemeinsamen Einrichtung (RNC) aufgrund von Informationen (REQUEST) über die zu versendende Datenmenge erfolgt.

5. Verfahren nach einem der Ansprüche 1 bis 4, **dadurch gekennzeichnet,**
**dass** die Zuordnung in der gemeinsamen Einrichtung (RNC) aufgrund von von der Funkstation (MT) übermittelten Angaben erfolgt.

6. Verfahren nach einem der Ansprüche 1 bis 5, **dadurch gekennzeichnet,**
**dass** das Signal (SPLIT) die von der Funkstation (MT) für den oder die Bestandteile der zu versendenden Datenmenge zu verwendenden Funkressourcen beinhaltet.

7. Verfahren nach einem der Ansprüche 1 bis 6, **dadurch gekennzeichnet,**
**dass** das Signal (SPLIT) von der gemeinsamen Einrichtung (RNC) an die mindestens zwei Funknetze (N1, N2, N3) gesendet wird.

8. Einrichtung (RNC) in einem heterogenen Netzwerk zur Organisation der teilnehmerseitigen Versendung einer Datenmenge über Funk durch eine Funkstation (MT),
wobei das heterogenes Netzwerk mindestens zwei Funkkommunikationssysteme mit ihren jeweiligen Funknetzen (N1, N2, N3), deren Funkabdeckungsbereiche sich in mindestens einem Überlappungsbereich örtlich überlappen, umfasst,
und wobei die mindestens zwei Funknetze (N1, N2, N3) mit der Einrichtung (RNC) verbunden sind,
wobei sich die Funkstation (MT) in dem mindestens einen Überlappungsbereich befindet,
und wobei die Funkstation (MT) Einrichtungen zur teilnehmerseitigen Versendung von Funksignalen zu den mindestens zwei Funknetzen (N1, N2, N3) aufweist,
**dadurch gekennzeichnet,**
**dass** die Einrichtung (RNC) Mittel (E) zur Bildung einer Zuordnung von einem oder mehreren Bestandteilen der von der Funkstation (MT) zu versendenden Datenmenge zu den mindestens zwei Funknetzen (N1, N2, N3) aufweist,
und **dass** die Einrichtung (RNC) Mittel (T) zur Erzeugung und Übermittlung eines Signals (SPLIT) mit Informationen über die Zuordnung über mindestens eines der mindestens zwei Funknetze (N1, N2, N3) an die Funkstation (MT) aufweist.

## Claims

1. Method for organization of subscriber transmission of a volume of data via radio by a mobile terminal (MT),
with a heterogeneous network being present, comprising at least two radio communication systems with their relevant radio networks (N1, N2, N3), of which the radio coverage areas overlap locally in at least one overlapping area,
and with the at least two radio networks (N1, N2, N3) being connected to a common device (RNC), with the mobile terminal (MT) being located in the at least one overlapping area,
and with the mobile terminal (MT) featuring devices for subscriber transmission of radio signals to the at least two radio networks (N1, N2, N3),
**characterized in that**
the common device (RNC) transfers a signal (SPLIT) via at least one of the at least two radio networks (N1, N2, N3) to the mobile terminal (MT) containing information about an assignment of one or more components of the volume of data to be sent to the at least two radio networks (N1, N2, N3).

2. Method in accordance with claim 1, **characterized in that**, the assignment is made in the common device (RNC) on the basis of information (UL-LR1, UL-LR2) about a loading of radio communication resources in one or more of the at least two radio communication systems.

3. Method in accordance with claim 1 or 2, **characterized in that**,
the assignment is made in the common device (RNC) on the basis of information about the quality of a connection between the mobile terminal (MT) and one or more of the at least two radio communication systems.

4. Method in accordance with one of the claims 1 to 3,
**characterized in that**
the assignment is made in the common device (RNC) on the basis of information (REQUEST) about the volume of data to be transmitted.

5. Method in accordance with one of the claims 1 to 4,
**characterized in that**
the assignment is made in the common device (RNC) on the basis of details transmitted by the mobile terminal (MT).

6. Method in accordance with one of the claims 1 to 5,
**characterized in that**
the signal (SPLIT) contains the radio resources to be used by the mobile terminal (MT) for the components of the volume of data to be transmitted.

7. Method in accordance with one of the claims 1 to 6,
**characterized in that**
the signal (SPLIT) is sent from the common device (RNC) to the at least two radio networks (N1, N2, N3).

8. Device (RNC) in a heterogeneous network for organization of the subscriber transmission of a volume of data via radio by a mobile terminal (MT), with the heterogeneous network comprising at least two radio communication systems with their relevant radio networks (N1, N2, N3), of which the radio coverage areas overlap locally in at least one overlapping area, and with the at least two radio networks (N1, N2, N3) being connected to the device (RNC),
with the mobile terminal (MT) being located in at least one overlapping area,
and with the mobile terminal (MT) featuring devices for subscriber transmission of radio signals to the at least two radio networks (N1, N2, N3),
**characterized in that**
the device (RNC) features means (E) for making an assignment from one or more elements of the volume of data to be transmitted by the mobile terminal (MT) to the at least two radio networks (N1, N2, N3), and that the device (RNC) features means (T) for generating and transmitting a signal (SPLIT) with information about the assignment via at least one of the two radio networks (N1, N2, N3) to the mobile terminal (MT).

## Revendications

1. Procédé pour l'organisation de l'envoi côté abonné d'une quantité de données par radio par une station radio (MT),
dans lequel un réseau hétérogène comprenant au moins deux systèmes de radiocommunication avec leurs réseaux radio (N1, N2, N3) respectifs, dont les zones de couverture radio se chevauchent localement dans au moins une zone de chevauchement, est présent,
et dans lequel les au moins deux réseaux radio (N1, N2, N3) sont reliés à un dispositif (RNC) commun,
la station radio (MT) se trouvant dans la au moins une zone de chevauchement, et
dans lequel la station radio (MT) présente des dispositifs pour l'envoi côté abonné de signaux radio aux au moins deux réseaux radio (N1, N2, N3),
**caractérisé en ce que**
le dispositif (RNC) commun transmet par au moins l'un des au moins deux réseaux radio (N1, N2, N3) de la station radio (MT) un signal (SPLIT) qui contient des informations sur une attribution d'un ou de plusieurs constituants de la quantité de données à envoyer aux au moins deux réseaux radio (N1, N2, N3).

2. Procédé selon la revendication 1, **caractérisé en ce que**
l'attribution dans le dispositif (RNC) commun s'effectue sur la base d'informations (UL-LR1, UL-LR2) concernant une utilisation maximale de ressources radio dans un ou plusieurs des au moins deux systèmes de radiocommunication.

3. Procédé selon la revendication 1 ou 2, **caractérisé en ce que**
l'attribution dans le dispositif (RNC) commun s'effectue sur la base d'informations concernant une qualité de liaison entre la station radio (MT) et l'un ou plusieurs des au moins deux systèmes de radiocommunication.

4. Procédé selon l'une quelconque des revendications 1 à 3,
**caractérisé en ce que**
l'attribution dans le dispositif (RNC) commun s'effectue sur la base d'informations (REQUEST) concernant la quantité de données à envoyer.

5. Procédé selon l'une quelconque des revendications 1 à 4,
**caractérisé en ce que**
l'attribution dans le dispositif (RNC) commun s'effectue sur la base d'indications transmises par la station radio (MT) .

6. Procédé selon l'une quelconque des revendications 1 à 5,
**caractérisé en ce que**
le signal (SPLIT) contient les ressources radio à utiliser par la station radio (MT) pour le ou les constituants de la quantité de données à envoyer.

7. Procédé selon l'une quelconque des revendications 1 à 6,
**caractérisé en ce que**
le signal (SPLIT) est envoyé du dispositif (RNC) commun aux au moins deux réseaux radio (N1, N2, N3).

8. Dispositif (RNC) dans un réseau hétérogène pour l'organisation de l'envoi côté abonné d'une quantité de données par radio par une station radio (MT),
dans lequel le réseau hétérogène comprend au moins deux systèmes de radiocommunication avec leurs réseaux radio (N1, N2, N3) respectifs, dont les zones de couverture radio se chevauchent localement dans au moins une zone de chevauchement,
et dans lequel les au moins deux réseaux radio (N1, N2, N3) sont reliés au dispositif (RNC),
la station radio (MT) se trouvant dans la au moins une zone de chevauchement,
et dans lequel la station radio (MT) présente des dispositifs pour l'envoi côté abonné de signaux radio aux au moins deux réseaux radio (N1, N2, N3),
**caractérisé en ce que**
le dispositif (RNC) comprend des moyens (E) pour la formation d'une attribution d'un ou de plusieurs constituants de la quantité de données à envoyer par la station radio (MT) aux au moins deux réseaux radio (N1, N2, N3),
et **en ce que** le dispositif (RNC) présente des moyens (T) pour la génération et la transmission d'un signal (SPLIT) avec des informations concernant l'attribution par l'un des au moins deux réseaux radio (N1, N2, N3) à la station radio (MT).
